# EUROPEAN PATENT SPECIFICATION

(11) **EP 4 025 843 B1**
(45) Date of publication and mention of the grant of the patent: **19.06.2024**
(21) Application number: 20780338.8
(22) Date of filing: 03.09.2020
(51) Int. Cl.: F24H 1/12, F24H 9/1818, F24H 9/20, C09K 5/14, H05B 3/42, F24H 7/04

(54) **ELECTRIC HEATER FOR HOUSEHOLD APPLIANCE**
ELEKTRISCHE HEIZVORRICHTUNG FÜR EIN HAUSHALTSGERÄT
DISPOSITIF DE CHAUFFAGE ÉLECTRIQUE POUR APPAREIL ÉLECTROMÉNAGER

(30) Priority: 03.09.2019 IT 201900015488
(43) Date of publication of application: 13.07.2022
(73) Proprietor: I.R.C.A. S.p.a. Industria Resistenze Corazzate e Affini, 31029 Vittorio Veneto (IT)
(72) Inventor: MONTAGNER, Damiano, 31013 Codognè (IT); ZOPPAS, Federico, 31100 Treviso (IT)
(74) Representative: de Alteriis, Renato
(86) International application number: PCT/IB2020/058202
(87) International publication number: WO 2021/044333

(56) References cited:
- WO-A1-2016/016428
- WO-A1-2017/099512
- CH-A1- 711 968
- DE-A1-102009 057 904
- US-A- 5 687 706

## Description

### Field of the invention

The present invention relates to an electric heater for a household appliance, e.g. for a machine for making hot beverages, an oven, a dishwasher, a washing machine and/or a tumble dryer.

The heater, in particular, is adapted or configured to be mounted in said household appliance, e.g. at least partially inside said appliance.

### Background art

The household appliances in which a fluid, e.g. water, is heated, are provided with one or more heaters that perform this function.

The mass of the heater is a critical factor to ensure the proper operation of the heater and to control it appropriately.

In particular, the mass is a critical factor for the heaters which must work in a controlled temperature range, and more particularly when there is an irregular heat exchange with the fluid to be heated.

Indeed, a large mass of material is required to mitigate the heating irregularities of the electric heating elements.

A large mass of material is also important to ensure thermal inertia, which allows the safety devices to have enough time to intervene, e.g. by cutting off the power supply in the event of overheating.

Typically, the simplest and most economical safety devices take a relatively long time to intervene and thus require the use of a large mass of material.

In order to use a lower mass amount, it is necessary to use particularly complex, and thus expensive, electronic safety devices to adjust the electric heating element even during sudden changes in temperature which may occur both during normal and abnormal operation.

Therefore, the need is felt for lighter electric heaters for household appliances, i.e. having a lower mass, which can be controlled with simple and cost-effective safety devices.

WO2016/016428A1 and WO2017/099512A1 represent known electric heaters comprising a phase change material.

### Summary of the invention

It is an object of the present invention to make an electric heater for household appliances that is light, space-saving, and that can be effectively controlled with simple and cost-effective safety devices.

It is another object of the present invention to make an electric heater which can heat the fluid more quickly and which can be controlled with simple and cost-effective safety devices, e.g. of electromechanical type.

It is a further object of the present invention to make such an electric heater which is also efficient from the energy point of view.

The present invention achieves at least one of such objects, and the other objects which will become apparent in light of the present description, by an electric heater according to claim 1.

In particular, the temperature ranges from 80 to 140 °C or from 120 to 140 °C have been selected so as to allow adequate heating of the fluid (when it passes through the conduit) and to slow down the heating produced by the electric heating device, so that a safety device has time to intervene, in particular to interrupt the power supply to the electric heating device.

The PCM material advantageously allows the temperature rise to be slowed down. The aforesaid temperature ranges were also selected according to the boiling temperature of the water or an aqueous solution to be heated. Advantageously, the electric heater allows water or an aqueous solution to be heated quickly, in particular to a temperature close to boiling temperature, and also allows the effective intervention of a safety device, even of electromechanical type, in case of need. The invention also relates to a household appliance according to claim 17. Advantageously, the electric heater, in particular the metal body, is lighter and thus allows rapid heating, particularly at an early stage, e.g. up to the working temperature. Furthermore, the electric heater can be equipped with a cost-effective safety device, e.g. of electromechanical type, which requires relatively long reaction times per se. Indeed, the phase change material or PCM allows, in a predetermined temperature range, the absorption of an amount of heat which, being stored, slows down the temperature increase of the entire system, in particular of the metal body, in a predetermined interval of time, thus allowing the electromechanical safety device to cut off the power supply to the electric heating device.

Preferably and advantageously, the PCM absorbs little heat during the initial step of heating (which is therefore quick).

Advantageously, the PCM allows slowing down the temperature rise within a precise range of the heating ramp. Advantageously, the absorbed energy can be transferred to the fluid at a later time.

Experimental tests have shown that the aforesaid effect of slowing down the temperature rise is optimized when the m/M ratio of the mass m of the phase change material to the mass M of the metal body is 5 to 2.

Preferably, in all embodiments, the m/M ratio is 5 to 2.

Preferably and advantageously, the PCM exhibits relatively low specific heat when in a physical phase and high latent phase change heat at a predetermined temperature.

In all embodiments, at least one safety device is provided, the latter being fixed to the metal body or said means. In particular, preferably, at least one safety device is fixed to the outer surface of the metal body or to the outer surface of said means.

Preferably, said at least one safety device is in contact, in particular directly in contact with the metal body or with said means, so that, advantageously, the safety device is particularly sensitive to the temperature of the metal body (or of said means).

Preferably, no bodies, in particular insulating bodies, in particular heat insulating bodies, are interposed between said at least one safety device and the metal body or between said at least one safety device and said means.

Preferably, the at least one safety device is outside, in particular completely outside, the electric heating device. Preferably, in all embodiments, the aforementioned first phase is a solid phase, and the aforementioned second phase is also a solid phase which, in particular, is different from the first solid phase.

Further features and advantages of the invention will become more apparent in light of the detailed description of preferred, but not exclusive embodiments.

The dependent claims describe particular embodiments of the invention.

### Brief description of the drawings

The description of the invention refers to the accompanying drawings, which are provided by way of non-limiting example, in which:
Fig. 1 diagrammatically shows a first example of electric heater according to the invention;
Fig. 2 diagrammatically shows another view of the electric heater in Fig. 1.
Fig. 3 shows a comparative chart of the temperature trend over time in an electric heater according to the invention and in a comparative electric heater;
Fig. 4 diagrammatically shows another example of electric heater according to the invention;
Fig. 5 diagrammatically shows another view of the electric heater in Fig. 4.
Fig. 6 diagrammatically shows another example of electric heater according to the invention;
Fig. 7 diagrammatically shows part of the electric heater in Fig. 6;
Fig. 8 diagrammatically shows another example of electric heater according to the invention.

The same elements or components have the same reference numerals.

### Description of example embodiments of the invention

Embodiments of an electric heater 100, 200, 300, 400 according to the invention are described with reference to the figures.

An electric heater 100, 200, 300, 400 is in particular for a household appliance, e.g. such as a machine for making hot beverages (e.g. coffee or cappuccino), or an oven, in particular a steam oven, or a dishwasher, or a washing machine, and/or tumble dryer.

In particular, the electric heater 100, 200, 300, 400 is adapted to be mounted in a household appliance, in particular is configured to be mounted in a household appliance. Preferably, the electric heater 100, 200, 300, 400 is adapted or configured to be mounted at least partially inside a household appliance, e.g. completely or only partially inside.

In other words, the electric heater 100, 200, 300, 400 is adapted or configured to be a component of a household appliance.

The heater 100, 200, 300, 400 is used in particular to heat a fluid, in particular water or an aqueous solution. For example, the heater 100, 200, 300, 400 is used to heat water in the liquid state so as to produce hot water in the liquid state or steam. The electric heater 100, 200, 300, 400 comprises:
a metal body 101, 201, 301, 401 either defining or provided with at least one conduit 102, 202, 302, 402 for the passage of a fluid, in particular water, to be heated;
at least one electric heating device 104, 204, 304, 404, constrained to the metal body 101, 201, 301, 401, adapted to generate heat when electrically powered, and
to transmit heat, preferably by conduction, to the metal body 101, 201, 301, 401 to heat the fluid in said at least one conduit 102, 202, 302, 402;
   - means 105, 205, 305, 405, in particular heat storage means, comprising a *phase change material* (PCM), constrained to the metal body 101, 201, 301, 401,
the phase change material being adapted to pass at least from a first phase to a second phase, and vice versa, in a temperature range from 80 to 140 °C, preferably from 120 to 140 °C.

Advantageously, said means 105, 205, 305, 405 are preferably arranged so as to absorb part of the heat generated by the at least one electric heating device 104, 204, 304, 404 and so as to transmit the stored heat to the metal body 101, 201, 301, 401 to heat the fluid in said at least one conduit 102, 202, 302, 402.

More in particular, the phase change material can absorb the heat generated by the electric heating device 104, 204, 304, 404 during the phase change.

Preferably, the aforementioned first phase is a solid phase and the aforementioned second phase is also a solid phase. More in particular, the first phase is a solid phase and the second phase is a recrystallized solid phase. In other words, preferably, the phase change takes place while maintaining the solid consistency. The means 105, 205, 305, 405 are preferably in contact, preferably directly in contact, with said at least one electric heating device 104, 204, 304, 404 and/or with said metal body 101, 201, 301, 401.

Preferably, the m/M ratio of the mass "m" of the phase change material to the mass "M" of the metal body 101, 201, 301, 401 is from 5 to 2.

Experimental tests have shown that this feature allows slowing down the increase of temperature, in particular of the metal body 101, 201, 301, 401, in an optimal manner.

Preferably, said phase change material is chosen from the group comprising tris(hydroxymethyl)ethane, pentaerythritol and a salt or combination of salts.

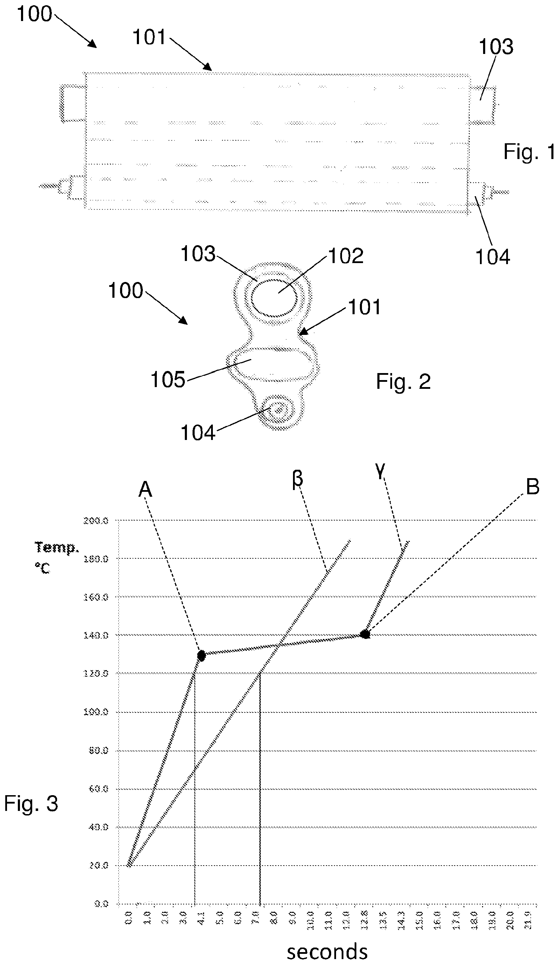

With particular reference to Figs. 1 and 2, an example of electric heater 100 according to the invention comprises a metal body 101 preferably made of aluminum or aluminum alloy.

A tube 103, which defines the conduit 102 for the fluid to be heated, is inserted into the metal body 101. The outer wall of the tube 103 is in contact, in particular directly in contact, with an inner wall of the metal body 101. Thereby, the metal body 101 can transmit heat to the tube 103. The tube 103 is preferably made of metal, and preferably made of steel.

The tube 103 preferably comprises one or two end portions, which protrude from the metal body 101.

In a variant (not shown), the tube 103 is not provided and the metal body 101 defines the passage conduit 102 for the fluid to be heated.

Although only one conduit 102 is shown, a plurality of conduits 102 can be provided, e.g. two conduits 102.

An electric heating device 104 is inserted into the metal body 101. The electric heating device 104 is preferably an sheathed resistor. In particular, the electric heating device 104 comprises a metal casing, e.g. made of steel, containing at least one resistive element, e.g. at least one resistive wire, which generates heat when electrically powered.

The outer surface of the electric heating device 104, in particular the outer surface of the metal casing thereof, is in contact, in particular directly in contact, with the inner wall of the metal body 101.

The electric heating device 104 preferably comprises one or two ends which protrude from the metal body 101.

Although only one electric heating device 104 is shown, a plurality of electric heating devices 104 can be provided, e.g. two electric heating devices 104.

The electric heating device 104 and the conduit 102, in particular the tube 103, preferably extend parallel to one another.

Preferably, the means 105 are arranged between the conduit 102 and the electric heating device 104.

In particular, the means 105 are arranged in a cavity of the metal body 101. The cavity is sealed so as to prevent the escape of the means 105.

The cavity, preferably longitudinal, in which the means 105 are arranged, extends preferably parallel to the conduit 102 and/or to the electric heating device 104. Preferably, the cavity, and thus the means 105, extend for either all or part, e.g. from 50 to 100%, of the length of the portion of the conduit 102 and/or of the portion of the electric heating device 104 which are inside the metal body 101.

The means 105 either comprise or consist of a mass of phase change material. In particular, such a mass of phase change material is sealed inside the cavity of the metal body 101.

The electric heater 101 is preferably a heater of the "flow-through heater" type. Preferably, the electric heater 101 defines a longitudinal axis. Preferably, the electric heating device 104, the conduit 102, and said means 105 extend parallel to said longitudinal axis.

The electric heater 100 comprises at least one safety device (not shown), preferably at least one electromechanical safety device, adapted to interrupt the power supply to the electric heating device 104 when it reaches a predetermined temperature, preferably equal to or higher than 130 °C. Preferably, the electromechanical safety device comprises at least one fuse and/or at least one bimetal element. The safety device is fixed to the metal body 101. In particular, the safety device is preferably fixed to the outer surface of the metal body 101.

Preferably, the safety device is in contact, in particular directly, with the metal body 101.

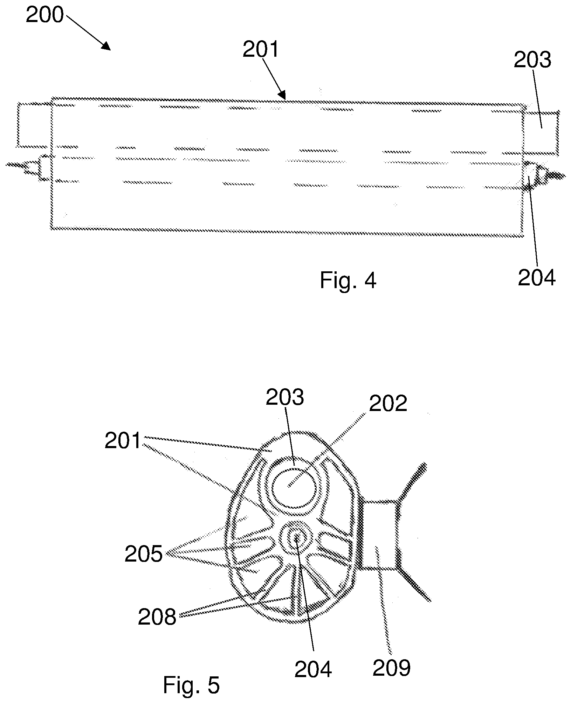

Preferably, there are no interposed bodies, in particular insulating bodies, in particular heat insulating bodies, between the safety device and the metal body. With particular reference to Figs. 4 and 5, another example of electric heater 200 according to the invention comprises a metal body 201 preferably made of aluminum or aluminum alloy.

A tube 203, which defines the conduit 202 for the fluid to be heated, is inserted into the metal body 201. The outer wall of the tube 203 is in contact, in particular directly in contact, with an inner wall of the metal body 201. Thereby, the metal body 201 can transmit heat to the tube 203. The tube 203 is preferably made of metal, and preferably is made of steel.

The tube 203 preferably comprises one or two end portions, which protrude from the metal body 201.

In a variant (not shown), the tube 203 is not provided and the metal body 201 defines the passage conduit 202 for the fluid to be heated.

Although only one conduit 202 is shown, a plurality of conduits 202 can be provided, e.g. two conduits 202.

An electric heating device 204 is inserted into the metal body 201. The electric heating device 204 is preferably a sheathed resistor. In particular, the electric heating device 204 comprises a metal casing, e.g. made of steel, containing at least one resistive element, e.g. at least one resistive wire, which generates heat when electrically powered.

The outer surface of the electric heating device 204, in particular the outer surface of the metal housing thereof, is in contact, in particular directly in contact, with the inner wall of the metal body 201.

The electric heating device 204 preferably comprises one or two ends which protrude from the metal body 201.

Although only one electric heating device 204 is shown, a plurality of electric heating devices 204 can be provided, e.g. two electric heating devices 204.

The electric heating device 204 and the conduit 202, in particular the tube 203, preferably extend parallel to one another.

The means 205 are preferably arranged, at least partially, around said at least one conduit 202 and said electric heating device 204.

In particular, the means 205 are arranged in a respective cavity of the metal body 201. Indeed, the metal body 201 is provided with a plurality of cavities, separated from one another by separating walls or partitions 208. Some cavities flank at least the conduit 202 and other cavities flank the electric heating device 204.

The cavities are sealed so as to prevent the escape of the means 205.

The cavities, preferably longitudinal, in which the means 205 are arranged, extends preferably parallel to the conduit 202 and/or to the electric heating device 204. Preferably, the cavities, and thus the means 205, extend for all or part, e.g. from 50 to 100%, of the length of the portion of the conduit 202 and/or of the portion of the electric heating device 204 which are inside the metal body 201.

The means 205 either comprise or consist of a mass of phase change material. Therefore, a plurality of masses of phase change material is provided and each mass is sealed in a respective cavity.

The electric heater 201 is preferably a heater of the "*flow-through heater*" type. Preferably, the electric heater 201 defines a longitudinal axis. Preferably, the electric heating device 204, the conduit 202, and said means 205 extend parallel to said longitudinal axis.

The electric heater 200 comprises at least one safety device 209, preferably at least one electromechanical safety device, adapted to interrupt the power supply to the electric heating device 204 when it reaches a predetermined temperature, preferably equal to or higher than 130 °C. Preferably, the electromechanical safety device 209 comprises at least one fuse and/or at least one bimetal element. The safety device is fixed to the metal body 201. In particular, the safety device 209 is preferably fixed to the outer surface of the metal body 201.

Preferably, the safety device 209 is in contact, in particular directly with the metal body 201.

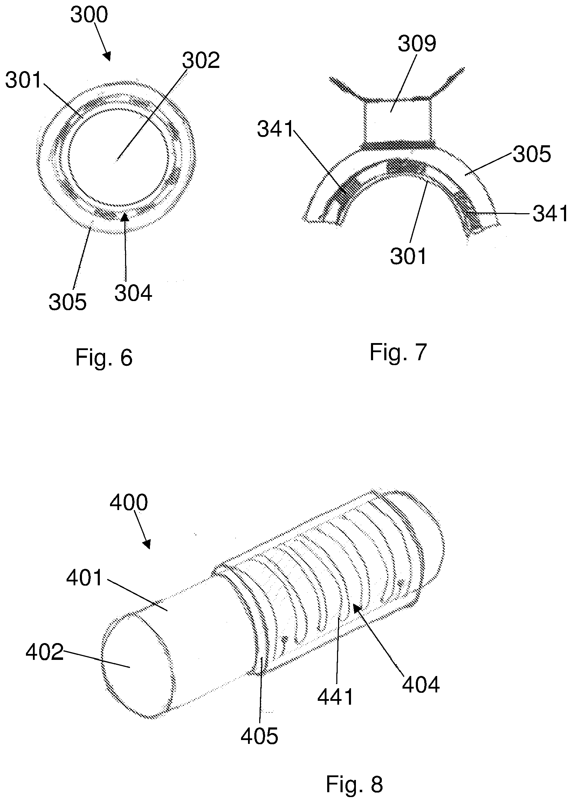

Preferably, between the safety device 209 and the metal body 201, there are no interposed bodies, in particular insulating bodies, in particular heat insulating bodies. Another example of electric heater 300 according to the invention is described with particular reference to Figs. 6 and 7. The metal body 301 of the electric heater 300 is, in particular, a tube, which defines the conduit 302 for the fluid to be heated. The metal body 301 is preferably made of steel. The metal body 301, i.e. the tube, preferably has a circular cross-section.

The electric heating device 304, preferably, comprises at least one electrically conductive track 341 adapted to generate heat when electrically powered. In particular, the conductive track 341 is made of metal. The conductive track 341 is preferably constrained to at least one electrically insulating layer. For example, the conductive track 341 is arranged on at least one electrically insulating layer, e.g. elastomeric.

For example, the conductive track 341 can be obtained by removing material from a metal foil, e.g. by chemical etching, whereby it is substantially a conductive foil; or it can be obtained by means of thick film technology.

The conductive track 341 is preferably from 10 to 100 µm (micron) thick.

The electric heating device 304 is arranged at least partially around the conduit 302. In particular, the electric heating device 304 is arranged at least partially around the metal body 301 and preferably is in contact, in particular directly in contact, with the outer surface of the metal body 301 which delimits the conduit 302.

Preferably, the electric heating device 304 is wound around, e.g. completely around, the metal body 301.

The electric heating device 304 is arranged between the conduit 302 and the means 305, i.e. between the metal body 301 and the means 305.

The means 305 will preferably comprise or consist of at least one sheet or layer, e.g. a sheet or a layer. The sheet can be made of phase change material, and preferably the sheet is solid, in particular substantially non-porous.

Alternatively, particles, e.g. micro-particles, of phase change material are embedded in the sheet. For example, the sheet is spongy or porous and comprises phase change material particles within it. The sheet is preferably made of a different material than the phase change material, e.g. is made of a thermally conductive metal material.

The means 305, in particular the sheet, are preferably in contact, preferably directly in contact, with the electric heating device 304.

The means 305, in particular the sheet, are arranged at least partially around the electric heating device 304. For example, the means 305, in particular the sheet, are arranged completely around the electric heating device 304.

Preferably, the metal body 301, the electric heating device 304, and the means 305 are mutually coaxial.

Preferably, the means 305 and the electric heating device 304 have substantially the same longitudinal extension.

Preferably, the means 305 and the electric heating device 304 extend from 50 to 100% of the longitudinal extension of the metal body 301.

The electric heater 300 comprises at least one safety device 309, preferably at least one electromechanical safety device, adapted to interrupt the power supply to the electric heating device 304 when it reaches a predetermined temperature, preferably equal to or higher than 130 °C. Preferably, the electromechanical safety device 309 comprises at least one fuse and/or at least one bimetal element. The safety device 309 is fixed to the means 305. In particular, the safety device 309 is preferably fixed to the outer surface of the means 305.

Preferably, the safety device 309 is in contact, in particular directly in contact with the means 305.

Preferably, between the safety device 309 and said means 305, there are no interposed bodies, in particular insulating bodies, in particular heat insulating bodies. Another example of electric heater 400 according to the invention is described with particular reference to Fig. 8. The metal body 401 of the electric heater 400 is, in particular, a tube, which defines the conduit 402 for the fluid to be heated.

The metal body 401 is preferably made of steel. The metal body 401, i.e. the tube, preferably has a circular cross-section.

The means 405 comprise or consist of at least one sheet or layer, e.g. a sheet or a layer. The sheet can be made of phase change material, and preferably the sheet is solid, in particular substantially non-porous.

Alternatively, particles, e.g. micro-particles, of phase change material are embedded in the sheet. For example, the sheet is spongy or porous and comprises phase change material particles within it. The sheet is preferably made of a different material than the phase change material, e.g. is made of a thermally conductive metal material.

The means 405, in particular the sheet, are preferably in contact, preferably directly in contact, with the outer surface of the metal body 401 which delimits the conduit 402.

The means 405, in particular the sheet, are arranged at least partially around the metal body 401. For example, the means 405, in particular the sheet, are arranged completely around the metal body 401.

The means 405 are preferably in contact, preferably directly in contact, with the electric heating device 404.

The electric heating device 404, preferably, comprises at least one electrically conductive track 441 adapted to generate heat when electrically powered. For example, the electrically conductive track is made of metal. The conductive track 441 is preferably constrained to at least one electrically insulating layer. For example, the conductive track 441 is arranged on at least one electrically insulating layer, e.g. elastomeric.

For example, the conductive track 441 can be obtained by removing material from a metal foil, e.g. by chemical etching, whereby it is substantially a conductive foil; or it can be obtained by means of thick film technology.

Preferably, the conductive track 441 is from 10 to 100 µm (micron) thick.

The electric heating device 404 is arranged at least partially around the means 405 and thus also around the conduit 402. Preferably, the electric heating device 404 is wound around, e.g. completely around, the means 405.

The means 405, in particular the sheet, are arranged between the conduit 302 and the electric heating device 404, i.e. between the metal body 401 and the electric heating device 404.

Preferably, the metal body 401, the electric heating device 404, and the means 405 are mutually coaxial.

Preferably, the means 405 and the electric heating device 404 have substantially the same longitudinal extension.

Preferably, the means 405 and the electric heating device 404 extend from 50 to 100% of the longitudinal extension of the metal body 401.

The electric heater 400 comprises at least one safety device (not shown), preferably at least one electromechanical safety device, adapted to interrupt the power supply to the electric heating device 404 when it reaches a predetermined temperature, preferably equal to or higher than 130 °C. Preferably, the electromechanical safety device comprises at least one fuse and/or at least one bimetal element. For example, the safety device is fixed to the metal body 401, preferably to the outer surface of the metal body 401.

Preferably, the safety device is in contact, in particular directly with the metal body 401.

Preferably, between the safety device and the metal body 401, there are no interposed bodies, in particular insulating bodies, in particular heat insulating bodies. Optionally, in all embodiments, said at least one safety device is outside, in particular completely outside, said at least one electric heating device 104, 204, 304, 404.

In all embodiments, preferably, the electric heater 100, 200, 300, 400 is configured as described below.

Considering an increasing temperature ramp - e.g. from 20 to 160°C - generated by the heat produced by the at least one electric heating device 104, 204, 304, 404 - which preferably develops a constant power - and dividing such a ramp into two consecutive sections defining a mutually equal temperature range, the first section (e.g. from 20 to 90 °C) having a first maximum temperature reached at first time "t1" and the second section (e.g. from 90 to 160 °C) having a second maximum temperature, greater than the first maximum temperature, reached at a second time "t2";
wherein during the first section the heat absorption of said phase change material is determined only by its specific heat, and during the second section the heat absorption of said phase change material is determined by the sum of the specific heat and of the latent phase change heat of said phase change material;
the electric heater 100, 200, 300, 400 is configured so that the ratio of the first time "t1" to the second time "t2" is less than 1.

An advantageous effect of an electric heater 100, 200, 300, 400 according to the invention is described with reference to Fig. 3, in particular relative to a comparative electric heater, which instead is not provided with the means 105, 205, 305, 405.

In particular, the curve β represents the temperature trend over time in a comparative heater, and the curve γ represents the temperature trend over time in a heater 100, 200, 300, 400.

The slope of the curve β, which is linear or substantially linear, substantially depends only on the mass to be heated and on the power supplied by the heating device. Considering, for example, that the desired operating point is in both cases about 120 °C, the comparative electric heater reaches such a temperature in about 7 seconds. Furthermore, it is worth noting that a safety device would have about 5 seconds to interrupt the power supply before the comparative electric heater reaches a critical temperature, e.g. 180°C.

The curve γ advantageously shows that there is an initial increase in heating speed, particularly about twice as fast as the comparative heater. In the section A-B, in which there is a change phase of the PCM, there is instead a drastic slowdown in the heating rate, particularly of the metal body 101, 201, 301, 401. Indeed, in the range A-B, the PCM absorbs much heat due to the ongoing phase change. So, in the section A-B, the safety device has more time to intervene by cutting off the power supply of the electric heating device 104, 204, 304, 404. The heat absorbed by the PCM can be subsequently transmitted to the metal body 101, 201, 301, 401 to heat the fluid in the conduit 102, 202, 302, 402.

Advantageously, the electric heater 100, 200, 300, 400 can have a lower overall weight than the comparative heater, in particular the metal body 101, 201, 301, 401 can be lighter, and an electromechanical safety device can be used.

The invention further relates to a household appliance (not shown) comprising at least one electric heater 100, 200, 300, 400, said household appliance being preferably a machine for making hot beverages, or an oven, or a dishwasher, or a washing machine, and/or a tumble dryer.

In particular, the electric heater 100, 200, 300, 400 is mounted inside the household appliance, in particular at least partially inside the household appliance.

## Claims

1. An electric heater (100, 200, 300, 400) for household appliance comprising
- a metal body (101, 201, 301, 401) defining or provided with at least one conduit (102, 202, 302, 402) for the passage of a fluid, in particular water or an aqueous solution, to be heated;
- at least one electric heating device (104, 204, 304, 404), fixed to the metal body (101, 201, 301, 401), adapted to generate heat when it is electrically powered, and to transmit heat to the metal body (101, 201, 301, 401) to heat the fluid in said at least one conduit (102, 202, 302, 402);
- means (105, 205, 305, 405), in particular heat storage means, comprising a phase change material (PCM), constrained to the metal body (101, 201, 301, 401),
the phase change material being adapted to pass at least from a first phase to a second phase, and vice versa, in a temperature range;
**characterized in that** said temperature range is from 80 to 140 °C or from 120 to 140 °C;
**in that** the electric heater (100, 200, 300, 400) comprises at least one safety device (209, 309), in particular at least one electromechanical safety device, adapted to interrupt the power supply to the at least one electric heating device (104, 204, 304, 404) when said at least one electric heating device (104, 204, 304, 404) reaches a predetermined temperature;
and **in that** said at least one safety device (209, 309) is fixed to the metal body (201) or to said means (305).

2. An electric heater (100, 200, 300, 400) according to claim 1, wherein the m/M ratio of the mass (m) of the phase change material to the mass (M) of the metal body (101, 201, 301, 401) is from 5 to 2.

3. An electric heater (100, 200, 300, 400) according to claim 1 or 2, wherein said household appliance is a machine for making hot beverages, or an oven, or a dishwasher, or a washing machine, and/or a tumble dryer.

4. An electric heater (100, 200, 300, 400) according to any one of the preceding claims, wherein said means (105, 205, 305, 405) are arranged so as to absorb part of the heat generated by the at least one electric heating device (104, 204, 304, 404) and so as to transmit the stored heat to the metal body (101, 201, 301, 401) to heat the fluid in said at least one conduit (102, 202, 302, 402).

5. An electric heater (100, 200, 300, 400) according to any one of the preceding claims, wherein said means (105, 205, 305, 405) are in contact, preferably directly in contact, with said at least one electric heating device (104, 204, 304, 404) and/or with said metal body (101, 201, 301, 401).

6. An electric heater (100, 200, 300, 400) according to any one of the preceding claims, wherein said means (105, 405) are arranged, at least partially, between said at least one conduit (102, 402) and said at least one electric heating device (104, 404); or wherein said electric heating device (304) is arranged between said at least one conduit (302) and said means (305).

7. An electric heater (100, 200) according to any one of the preceding claims, wherein said means (105, 205) are arranged in at least one cavity of the metal body (101, 201).

8. An electric heater (100, 200, 300, 400) according to any one of the preceding claims, wherein said at least one electric heating device (104, 204) is an sheathed resistor arranged in the metal body (101, 201), or wherein at least one electric heater (304, 404) comprises at least one electrically conductive track (341, 441) constrained to at least one electrically insulating layer.

9. An electric heater (200, 300, 400) according to any one of the preceding claims, wherein said means (205, 305, 405) are arranged at least partially around the conduit (202, 302, 402) and/or wherein said means (205, 305) are arranged at least partially around said at least one electric heating device (204, 304).

10. An electric heater (100, 200, 300, 400) according to any one of the preceding claims, wherein said phase change material is selected from the group comprising tris(hydroxymethyl)ethane, pentaerythritol, and a salt or a combination of salts.

11. An electric heater (300, 400) according to any one of the preceding claims, wherein said means (305, 405) comprise at least one sheet, wherein said at least one sheet is made of said phase change material or wherein particles of said phase change material are incorporated in said at least one sheet.

12. An electric heater (100, 200, 300, 400) according to any one of the preceding claims, wherein said at least one safety device (209, 309) comprises at least one fuse and/or at least one bimetal element.

13. An electric heater (100, 200, 300, 400) according to claim 12, wherein said predetermined temperature is either greater than or equal to 130 °C.

14. An electric theater (100, 200, 300, 400) according to claim 12 or 13, wherein said at least one safety device (209, 309) is fixed to the outer surface of the metal body (201) or to the outer surface of said means (305).

15. An electric heater (100, 200, 300, 400) according to any one of the preceding claims, wherein considering a rising temperature ramp generated by the heat produced by the at least one electric heating device (104, 204, 304, 404) and dividing such a ramp into two consecutive sections defining a mutually equal temperature range, the first section having a first maximum temperature reached in a first time (t1) and the second section having a second maximum temperature, greater than the first maximum temperature, reached in a second time (t2); wherein during the first section the heat absorption of said phase change material is determined only by its specific heat, and during the second section the heat absorption of said phase change material is determined by the sum of the specific heat and of the latent phase change heat of said phase change material; the electric heater (100, 200, 300, 400) is configured so that the ratio of the first time (t1) to the second time (t2) is less than 1.

16. An electric heater (100, 200, 300, 400) according to any one of the preceding claims, configured to be mounted in a household appliance.

17. A household appliance comprising at least one electric heater (100, 200, 300, 400) according to any one of the preceding claims, said household appliance being preferably a machine for making hot beverages, or an oven, or a dishwasher, or a washing machine, and/or a tumble dryer.

## Patentansprüche

1. Elektrische Heizvorrichtung (100, 200, 300, 400) für ein Haushaltsgerät, umfassend
- einen Metallkörper (101, 201, 301, 401), der mindestens eine Leitung (102, 202, 302, 402) für den Durchgang von zu erwärmendem Fluid, insbesondere Wasser oder eine wässrige Lösung, definiert oder damit versehen ist;
- mindestens eine elektrische Heizeinrichtung (104, 204, 304, 404), die an dem Metallkörper (101, 201, 301, 401) befestigt und dazu geeignet ist, Wärme zu erzeugen, wenn sie elektrisch betrieben wird, und die Wärme auf den Metallkörper (101, 201, 301, 401) zu übertragen, um das Fluid in der mindestens einen Leitung (102, 202, 302, 402) zu erwärmen;
- Mittel (105, 205, 305, 405), insbesondere Wärmespeichermittel, die ein Phasenwechselmaterial (PCM, phase change material) umfassen, das an den Metallkörper (101, 201, 301, 401) gebunden ist, wobei das Phasenwechselmaterial dazu geeignet ist, in einem Temperaturbereich mindestens von einer ersten Phase in eine zweite Phase und umgekehrt überzugehen;
**dadurch gekennzeichnet, dass** der Temperaturbereich zwischen 80 und 140 °C oder zwischen 120 und 140 °C liegt;
dass die elektrische Heizvorrichtung (100, 200, 300, 400) mindestens eine Sicherheitseinrichtung (209, 309), insbesondere mindestens eine elektromechanische Sicherheitseinrichtung, umfasst, die dazu geeignet ist, die Stromzufuhr zu der mindestens einen elektrischen Heizeinrichtung (104, 204, 304, 404) zu unterbrechen, wenn die mindestens eine elektrische Heizeinrichtung (104, 204, 304, 404) eine vorbestimmte Temperatur erreicht;
und dadurch, dass die mindestens eine Sicherheitseinrichtung (209, 309) an dem Metallkörper (201) oder an dem Mittel (305) befestigt ist.

2. Elektrische Heizvorrichtung (100, 200, 300, 400) nach Anspruch 1, wobei das m/M-Verhältnis der Masse (m) des Phasenwechselmaterials zu der Masse (M) des Metallkörpers (101, 201, 301, 401) 5 bis 2 beträgt.

3. Elektrische Heizvorrichtung (100, 200, 300, 400) nach Anspruch 1 oder 2, wobei das Haushaltsgerät eine Maschine zum Zubereiten von Heißgetränken oder ein Ofen oder ein Geschirrspüler oder eine Waschmaschine und/oder ein Wäschetrockner ist.

4. Elektrische Heizvorrichtung (100, 200, 300, 400) nach einem der vorhergehenden Ansprüche, wobei die Mittel (105, 205, 305, 405) derart angeordnet sind, dass sie einen Teil der von der mindestens einen elektrischen Heizeinrichtung (104, 204, 304, 404) erzeugten Wärme absorbieren und die gespeicherte Wärme an den Metallkörper (101, 201, 301, 401) übertragen, um das Fluid in der mindestens einen Leitung (102, 202, 302, 402) zu erwärmen.

5. Elektrische Heizvorrichtung (100, 200, 300, 400) nach einem der vorhergehenden Ansprüche, wobei die Mittel (105, 205, 305, 405) mit der mindestens einen elektrischen Heizeinrichtung (104, 204, 304, 404) und/oder mit dem Metallkörper (101, 201, 301, 401) in Kontakt, vorzugsweise in direktem Kontakt, stehen.

6. Elektrische Heizvorrichtung (100, 200, 300, 400) nach einem der vorhergehenden Ansprüche, wobei die Mittel (105, 405) mindestens teilweise zwischen der mindestens einen Leitung (102, 402) und der mindestens einen elektrischen Heizeinrichtung (104, 404) angeordnet sind; oder wobei die elektrische Heizeinrichtung (304) zwischen der mindestens einen Leitung (302) und dem Mittel (305) angeordnet ist.

7. Elektrische Heizvorrichtung (100, 200) nach einem der vorhergehenden Ansprüche, wobei die Mittel (105, 205) in mindestens einem Hohlraum des Metallkörpers (101, 201) angeordnet sind.

8. Elektrische Heizvorrichtung (100, 200, 300, 400) nach einem der vorhergehenden Ansprüche, wobei die mindestens eine elektrische Heizeinrichtung (104, 204) ein in dem Metallkörper (101, 201) angeordneter ummantelter Widerstand ist, oder wobei mindestens eine elektrische Heizvorrichtung (304, 404) mindestens eine elektrisch leitfähige Bahn (341, 441) umfasst, die an mindestens eine elektrisch isolierende Schicht gebunden ist.

9. Elektrische Heizvorrichtung (200, 300, 400) nach einem der vorhergehenden Ansprüche, wobei die Mittel (205, 305, 405) mindestens teilweise um die Leitung (202, 302, 402) herum angeordnet sind und/oder wobei die Mittel (205, 305) mindestens teilweise um die mindestens eine elektrische Heizeinrichtung (204, 304) angeordnet sind.

10. Elektrische Heizvorrichtung (100, 200, 300, 400) nach einem der vorhergehenden Ansprüche, wobei das Phasenwechselmaterial aus der Gruppe ausgewählt ist, die Tris(hydroxymethyl)ethan, Pentaerythritol und ein Salz oder eine Kombination von Salzen umfasst.

11. Elektrische Heizvorrichtung (300, 400) nach einem der vorhergehenden Ansprüche, wobei die Mittel (305, 405) mindestens eine Platte umfassen, wobei die mindestens eine Platte aus dem Phasenwechselmaterial hergestellt ist oder wobei Partikel des Phasenwechselmaterials in die mindestens eine Platte eingearbeitet sind.

12. Elektrische Heizvorrichtung (100, 200, 300, 400) nach einem der vorhergehenden Ansprüche, wobei die mindestens eine Sicherheitseinrichtung (209, 309) mindestens eine Sicherung und/oder mindestens ein Bimetallelement umfasst.

13. Elektrische Heizvorrichtung (100, 200, 300, 400) nach Anspruch 12, wobei die vorbestimmte Temperatur entweder größer als oder gleich 130 °C ist.

14. Elektrische Heizvorrichtung (100, 200, 300, 400) nach Anspruch 12 oder 13, wobei die mindestens eine Sicherheitseinrichtung (209, 309) an der Außenoberfläche des Metallkörpers (201) oder an der Außenoberfläche des Mittels (305) befestigt ist.

15. Elektrische Heizvorrichtung (100, 200, 300, 400) nach einem der vorhergehenden Ansprüche, wobei eine ansteigende Temperaturrampe, die durch die von der mindestens einen elektrischen Heizeinrichtung (104, 204, 304, 404) erzeugten Wärme erzeugt wird, betrachtet wird und eine solche Rampe in zwei aufeinanderfolgende Abschnitte unterteilt wird, die einen gegenseitig gleichen Temperaturbereich definieren, wobei der erste Abschnitt eine erste maximale Temperatur aufweist, die in einer ersten Zeit (t1) erreicht wird, und der zweite Abschnitt eine zweite maximale Temperatur aufweist, die größer als die erste maximale Temperatur ist und in einer zweiten Zeit (t2) erreicht wird;
wobei während des ersten Abschnitts die Wärmeabsorption des Phasenwechselmaterials nur durch dessen spezifische Wärme bestimmt wird und während des zweiten Abschnitts die Wärmeabsorption des Phasenwechselmaterials durch die Summe der spezifischen Wärme und der latenten Phasenwechselwärme des Phasenwechselmaterials bestimmt wird;
wobei die elektrische Heizvorrichtung (100, 200, 300, 400) derart ausgestaltet ist, dass das Verhältnis der ersten Zeit (t1) zu der zweiten Zeit (t2) weniger als 1 beträgt.

16. Elektrische Heizvorrichtung (100, 200, 300, 400) nach einem der vorhergehenden Ansprüche, die zum Einbau in ein Haushaltsgerät ausgelegt ist.

17. Haushaltsgerät, das mindestens eine elektrische Heizvorrichtung (100, 200, 300, 400) nach einem der vorhergehenden Ansprüche umfasst, wobei das Haushaltsgerät vorzugsweise eine Maschine zum Zubereiten von Heißgetränken oder ein Ofen oder ein Geschirrspüler oder eine Waschmaschine und/oder ein Wäschetrockner ist.

## Revendications

1. Radiateur électrique (100, 200, 300, 400) pour appareil ménager comprenant
- un corps métallique (101, 201, 301, 401) définissant ou muni d'au moins un conduit (102, 202, 302, 402) pour le passage d'un fluide, notamment de l'eau ou une solution aqueuse, à chauffer ;
- au moins un dispositif de chauffage électrique (104, 204, 304, 404), fixé au corps métallique (101, 201, 301, 401), adapté pour générer de la chaleur lorsqu'il est alimenté électriquement, et pour transmettre de la chaleur au corps métallique (101, 201, 301, 401) pour chauffer le fluide dans ledit au moins un conduit (102, 202, 302, 402) ;
- des moyens (105, 205, 305, 405), en particulier des moyens de stockage de chaleur, comprenant un matériau à changement de phase (PCM), contraint au corps métallique (101, 201, 301, 401), le matériau à changement de phase étant adapté pour passer au moins d'une première phase à une seconde phase, et vice versa, dans une plage de température ;
**caractérisé en ce que** ladite plage de température est de 80 à 140 °C ou de 120 à 140 °C ;
**en ce que** le radiateur électrique (100, 200, 300, 400) comprend au moins un dispositif de sécurité (209, 309), en particulier au moins un dispositif de sécurité électromécanique, adapté pour interrompre l'alimentation électrique à au moins un dispositif de chauffage électrique (104, 204, 304, 404) lorsque ledit au moins un dispositif de chauffage électrique (104, 204, 304, 404) atteint une température prédéterminée ;
et **en ce que** ledit au moins un dispositif de sécurité (209, 309) est fixé au corps métallique (201) ou auxdits moyens (305).

2. Radiateur électrique (100, 200, 300, 400) selon la revendication 1, dans lequel le rapport m/M entre la masse (m) du matériau à changement de phase et la masse (M) du corps métallique (101, 201, 301, 401) est de 5 à 2.

3. Radiateur électrique (100, 200, 300, 400) selon la revendication 1 ou 2, dans lequel ledit appareil ménager est une machine pour préparer des boissons chaudes, ou un four, ou un lave-vaisselle, ou un lave-linge, et/ou un sèche-linge.

4. Radiateur électrique (100, 200, 300, 400) selon quelconque des revendications précédentes, dans lequel lesdits moyens (105, 205, 305, 405) sont agencés de manière à absorber une partie de la chaleur générée par au moins un dispositif de chauffage électrique (104, 204, 304, 404) et de manière à transmettre la chaleur stockée au corps métallique (101, 201, 301, 401) pour chauffer le fluide dans ledit au moins un conduit (102, 202, 302, 402).

5. Radiateur électrique (100, 200, 300, 400) selon quelconque des revendications précédentes, dans lequel lesdits moyens (105, 205, 305, 405) sont en contact, de préférence directement en contact, avec ledit au moins un dispositif de chauffage électrique (104, 204, 304, 404) et/ou avec ledit corps métallique (101, 201, 301, 401).

6. Radiateur électrique (100, 200, 300, 400) selon quelconque des revendications précédentes, dans lequel lesdits moyens (105, 405) sont agencés, au moins partiellement, entre ledit au moins un conduit (102, 402) et ledit au moins un dispositif de chauffage électrique (104, 404) ; ou dans lequel ledit dispositif de chauffage électrique (304) est agencé entre ledit au moins un conduit (302) et lesdits moyens (305).

7. Radiateur électrique (100, 200) selon quelconque des revendications précédentes, dans lequel lesdits moyens (105, 205) sont agencés dans au moins une cavité du corps métallique (101, 201).

8. Radiateur électrique (100, 200, 300, 400) selon quelconque des revendications précédentes, dans lequel ledit au moins un dispositif de chauffage électrique (104, 204) est une résistance gainée agencée dans le corps métallique (101, 201), ou dans lequel au moins un radiateur électrique (304, 404) comprend au moins une piste électriquement conductrice (341, 441) contrainte à au moins une couche électriquement isolante.

9. Radiateur électrique (200, 300, 400) selon quelconque des revendications précédentes, dans lequel lesdits moyens (205, 305, 405) sont agencés au moins partiellement autour du conduit (202, 302, 402) et/ou dans lequel lesdits moyens (205, 305) sont agencés au moins partiellement autour dudit au moins un dispositif de chauffage électrique (204, 304).

10. Radiateur électrique (100, 200, 300, 400) selon quelconque des revendications précédentes, dans lequel ledit matériel à changement de phase est choisi dans le groupe comprenant le tris(hydroxyméthyl)éthane, le pentaérythritol et un sel ou une combinaison de sels.

11. Radiateur électrique (300, 400) selon quelconque des revendications précédentes, dans lequel lesdits moyens (305, 405) comprennent au moins une feuille, dans lequel ladite au moins une feuille est faite dudit matériel à changement de phase ou dans lequel des particules dudit matériel à changement de phase sont incorporées dans ladite au moins une feuille.

12. Radiateur électrique (100, 200, 300, 400) selon quelconque des revendications précédentes, dans lequel ledit au moins un dispositif de sécurité (209, 309) comprend au moins un fusible et/ou au moins un élément bimétallique.

13. Radiateur électrique (100, 200, 300, 400) selon la revendication 12, dans lequel ladite température prédéterminée est supérieure ou égale à 130 °C.

14. Radiateur électrique (100, 200, 300, 400) selon la revendication 12 ou 13, dans lequel ledit au moins un dispositif de sécurité (209, 309) est fixé à la surface extérieure du corps métallique (201) ou à la surface extérieure desdits moyens (305).

15. Radiateur électrique (100, 200, 300, 400) selon quelconque des revendications précédentes, dans lequel on considère une rampe de température croissante générée par la chaleur produite par l'au moins un dispositif de chauffage électrique (104, 204, 304, 404) et on divise une telle rampe en deux sections consécutives définissant une plage de températures mutuellement égales, la première section ayant une première température maximale atteinte dans un premier temps (t1) et la seconde section ayant une seconde température maximale, supérieure à la première température maximale, atteinte dans un second temps (t2) ;
dans lequel, au cours de la première section, l'absorption de chaleur dudit matériel à changement de phase est déterminée uniquement par sa chaleur spécifique, et au cours de la seconde section, l'absorption de chaleur dudit matériel à changement de phase est déterminée par la somme de la chaleur spécifique et de la chaleur à changement de phase latente dudit matériel à changement de phase ;
le radiateur électrique (100, 200, 300, 400) est configuré de telle sorte que le rapport entre le premier temps (t1) et le second temps (t2) est inférieur à 1.

16. Radiateur électrique (100, 200, 300, 400) selon quelconque des revendications précédentes, configuré pour être monté dans un appareil ménager.

17. Appareil ménager comprenant au moins un radiateur électrique (100, 200, 300, 400) selon quelconque des revendications précédentes, ledit appareil ménager étant de préférence une machine à préparer des boissons chaudes, ou un four, ou un lave-vaisselle, ou un lave-linge, et/ou un sèche-linge.
